## Europäisches Patentamt
## European Patent Office
## Office européen des brevets

(19)

(11) Veröffentlichungsnummer: **0 144 931**
**B1**

(12) # EUROPÄISCHE PATENTSCHRIFT

(45) Veröffentlichungstag der Patentschrift:
24.05.89

(51) Int. Cl.⁴: **B 23 K 11/32**

(21) Anmeldenummer: **84114543.6**

(22) Anmeldetag: **30.11.84**

(54) **Gitterschweissmaschine.**

(30) Priorität: **03.12.83 DE 3343763**

(43) Veröffentlichungstag der Anmeldung:
**19.06.85 Patentblatt 85/25**

(45) Bekanntmachung des Hinweises auf die Patenterteilung:
**24.05.89 Patentblatt 89/21**

(84) Benannte Vertragsstaaten:
**AT BE DE FR GB IT LU NL SE**

(56) Entgegenhaltungen:
**DE-C- 3 327 243**
**US-A- 2 844 708**
**US-A- 3 588 417**

(73) Patentinhaber: **Baustahlgewebe GmbH,
Burggrafenstrasse 5, D-4000 Düsseldorf 11 (DE)**

(72) Erfinder: **Sotonyi, Thomas, Dipl.-Ing., Hauptstrasse 37,
D-3004 Isernhagen 2 (DE)**
Erfinder: **Webers, Heinz, Dipl.-Ing., Ackerstrasse 4,
D-4005 Meerbusch 2 (DE)**
Erfinder: **Elle, Erich, Dipl.-Ing., Schützendelle 39,
D-4053 Korschenbroich 3 (DE)**

(74) Vertreter: **Patentanwaltsbüro Cohausz & Florack,
Schumannstrasse 97, D-4000 Düsseldorf 1 (DE)**

## Beschreibung

Die Erfindung bezieht sich auf eine Maschine zum Herstellen von aus Längs- und Querdrähten bestehenden und an deren Kreuzungspunkten verschweißten Drahtgittern, insbesondere für Betonbewehrungszwecke, bestehend aus mehreren auf Schienen auf gegenseitigen Abstand verfahrbaren Schweißeinheiten, die jeweils ein aus unterer und oberer Elektrode bestehendes Elektrodenpaar mit einer druckbeaufschlagten Hubeinrichtung für die obere Elektrode aufweisen, wobei die Hubeinrichtung zur Hubbegrenzung der Elektrode einen einstellbaren Anschlag aufweist, der gegen das die obere Elektrode verstellende Antriebsorgan verstellbar ist.

Eine solche Maschine hat gegenüber einer Maschine, bei der die unteren und oberen Elektroden nicht paarweise einzelnen Schweißeinheiten zugeordnet sind, sondern unabhängig voneinander auf jeweils einer Schiene verfahrbar sind, den Vorteil, daß bei Einstellung des Längsdrahtabstandes eine Ausrichtung von unterer und oberer Elektrode sich erübrigt.

Bei einer Maschine mit einzeln verfahrbaren Schweißeinheiten mit oberer und unterer Elektrode weist jede Schweißeinheit für die Hubbewegung der oberen Elektrode eine eigene Hubeinrichtung auf. Zwar wird dadurch der vorrichtungstechnische Aufwand gegenüber einer gemeinsamen Betätigung durch einen sich über alle Schweißeinheiten erstreckenden Balken vergrößert, doch läßt sich damit der Schweißdruck individuell steuern.

Ein Nachteil einer Gitterschweißmaschine mit einzelnen Schweißeinheiten besteht darin, daß die Taktzeit zwischen den einzelnen Schweißungen zu lang ist. Da eine Gitterschweißmaschine für unterschiedliche Drahtstärken ausgelegt sein muß, muß der maximale Elektrodenabstand etwas größer als die Summe der Drahtstärken der dicksten Längs- und Querstäbe sein. Sollen beispielsweise Längs- und Querstäbe mit je 12 mm Durchmesser verschweißt werden, dann muß der Elektrodenabstand größer als 24 mm sein. Sollen dagegen Längs- und Querstäbe von je 4 mm Durchmesser verschweißt werden, dann braucht der Elektrodenabstand nur etwas größer als 8 mm zu sein. Ein Vergleich dieser beiden Beispiele läßt erkennen, daß bei den dünnen Stäben ein um 16 mm größerer Leerhub für das Aufsetzen der Elektroden durchfahren werden muß. Diese speziell bei dünneren Stabsorten in Kauf zu nehmende Hubdifferenz und die damit verbundene Reduzierung der Taktzeit kann den Produktionausstoß einer Maschine bis zu 20% vermindern. Da bei der Verschweißung von dünnen Stäben unter Zugrundelegung der geringeren Schweißleistungs- und Schweißzeiteinstellung im Verhältnis zu den Einstellwerten bei dickeren Stäben eine bedeutend höhere Taktzeit erwartet werden kann, verhalten sich die der Hubzeiten dazu reziprok.

Ein weiteres Problem hinsichtlich des optimalen Hubes der oberen Elektroden sowohl bei Schweißmaschinen mit Schweißbalken für die oberen Elektroden als auch bei Schweißmaschinen mit Schweißeinheiten besteht darin, daß sich die Elektroden während des Schweißens abnutzen. Der Abnutzungsgrad der einzelnen Elektroden ist von Schweißeinheit zu Schweißeinheit unterschiedlich und hängt von der aufgebrachten Schweißleistung ab. Das bedeutet, daß sich im Laufe der Zeit unterschiedlich große Leerhübe für die einzelnen Schweißeinheiten ergeben. Entsprechend dem Abbrand ergeben sich längere Hubzeiten und damit längere Taktzeiten.

Wegen des Abbrandes ist es üblich, die Elektroden von Zeit zu Zeit gegen neue oder zumindest nachgearbeitete Elektroden auszuwechseln. Das Auswechseln und das Nacharbeiten ist arbeitsaufwendig.

Der Erfindung liegt die Aufgabe zugrunde, eine Gitterschweißmaschine der eingangs genannten Art zu schaffen, mit der es möglich ist, die Drahtgitter mit optimaler Taktfolge zu schweißen.

Diese Aufgabe wird erfindungsgemäß dadurch gelöst, daß jedem Anschlag ein Stellmotor zum Vor- und Zurückstellen zugeordnet ist, und daß für die Ansteuerung eines jeden Stellmotors eine Steuereinrichtung vorgesehen ist, die die mittels der Stellmotoren verstellbaren Anschläge individuell bis auf einen kleinsten Abstand der oberen Elektrode von der unteren Elektrode verstellen, der der Gesamtdicke von Längs- und Querdrähten entspricht, und dann alle Anschläge um einen Hubweg, der dem gewünschten Elektrodenhub entspricht, zurückstellt.

Bei der erfindungsgemäßen Maschine wird sowohl der individuelle Abbrand der Elektroden der einzelnen Einheiten als auch die Dicke der zu verschweißenden Drähte bei der Einstellung der Ruheposition berücksichtigt, so daß alle Elektroden aus ihrer Ruhestellung bis zum Aufsetzen auf die Drähte an den Kreuzungsstellen den gleichen Hubweg durchfahren müssen. Deshalb ist es möglich, die Gitterschweißmaschine mit optimaler Taktzeit zu betreiben. Die Einstellung des Anschlages erfolgt entweder mit oder ohne zwischen den Elektroden befindlichen Drähten. Sofern sich bei der Einstellung die Drähte zwischen den Elektroden befinden, wird die Drahtstärke beim Rückhub bis in die Grundstellung automatisch berücksichtigt. Die Berücksichtigung kann aber auch ohne Drähte dadurch erfolgen, daß die Steuereinrichtung entsprechend der Drahtstärke programmiert ist. In beiden Fällen wird jedoch davon ausgegangen, daß die obere Elektrode entweder auf den Drähten oder auf der unteren Elektrode aufsitzt, so daß der vorsteuerbare Anschlag nicht weiter vorgestellt werden kann, wenn der Stellmotor ein Signal zum Umsteuern, d.h. zum Zurückstellen des Anschlages, bekommt. Dieses Signal zum Umsteuern kann z.B. von einem Näherungsschalter gegeben werden, der von dem Anschlag betätigt wird. Die Steuereinrichtung kann auch so programmiert sein, daß der Anschlag so weit zurückgesteuert wird, daß bei größeren Drahtdurchmessern sich ein größerer Leerhub als bei kleineren Drahtdurchmessern ergibt. Auf diese Art und Weise kann sichergestellt werden, daß auch dikkere Querstäbe kollisionsfrei eingeführt werden können.

Da mit der erfindungsgemäßen Maschine es möglich ist, auf einfache Art und Weise sämtliche Elektrodenpaare auf denselben Abstand einzustellen, ist es auch nicht länger erforderlich, Elektroden mit Abbrand gegen neue oder zumindest nachgearbeitete Elektroden auszutauschen. In der Maschine lassen sich die Elektroden auf einfache Art und Weise nacharbeiten, wobei gewährleistet ist, daß an keiner Elektrode unnötig viel Material beim Nacharbeiten abgetragen wird. Das Nacharbeiten läßt sich nach einer Ausgestaltung der Erfindung problemlos mit einem Werkzeug durchführen, das auf einer parallel zur Schiene der Schweißeinheiten angeordneten Schiene verfahrbar ist, wobei das Werkzeug zwischen die auf denselben Abstand eingestellten Elektroden einführbar ist. Als Werkzeug eignen sich Schleif- und Fräswerkzeuge, insbesondere Scheiben.

Nach einer weiteren Ausgestaltung der Erfindung ist das Antriebsorgan für jede obere Elektrode ein doppelseitig beaufschlagbarer Zylinderkolben, wobei der Anschlag ein in dem zugehörigen Zylinderraum in Bewegungsrichtung des Zylinderkolbens einfahrbarer Stößel ist. Der Stößel kann auf einer Teillänge als Spindel ausgebildet sein, auf der eine in Stellrichtung axial fixierbare Mutter sitzt. Der Antriebsmotor ist vorzugsweise über eine Teleskopkupplung drehfest mit der Spindel gekuppelt.

Im folgenden wird die Erfindung anhand einer ein Ausführungsbeispiel darstellenden Zeichnung näher erläutert. Im einzelnen zeigen

Fig. 1 eine Gitterschweißmaschine mit mehreren nebeneinander angeordneten und auf gegenseitigen Abstand verfahrbaren Schweißeinheiten in perpsektivischer Darstellung,

Fig. 2 einen Teil einer Schweißeinheit der Fig. 1 in Seitenansicht und teilweise im Axialschnitt bei geöffneten Elektroden,

Fig. 3 die Schweißeinheit gem. Fig. 2 in Seitenansicht mit geschlossenen Elektroden,

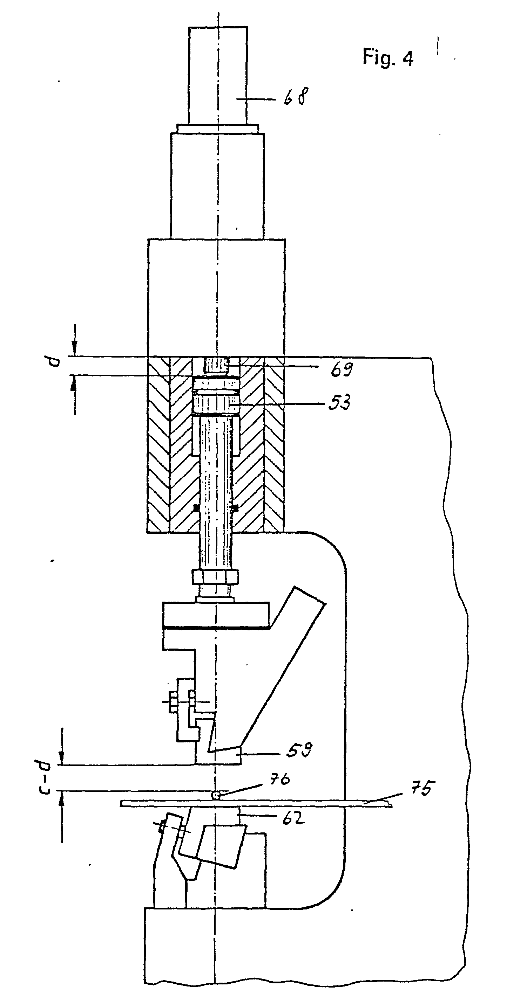

Fig. 4 die Schweißeinheit gem. Fig. 2 mit geöffneten Elektroden, aber mit einem zu Fig. 1 kleineren Elektrodenabstand in Seitenansicht und

Fig. 5 die Gitterschweißmaschine gem. Fig. 1, jedoch zusätzlich mit auf einer angebauten Schiene verfahrbarem Werkzeug zum Nacharbeiten der Elektroden in Seitenansicht.

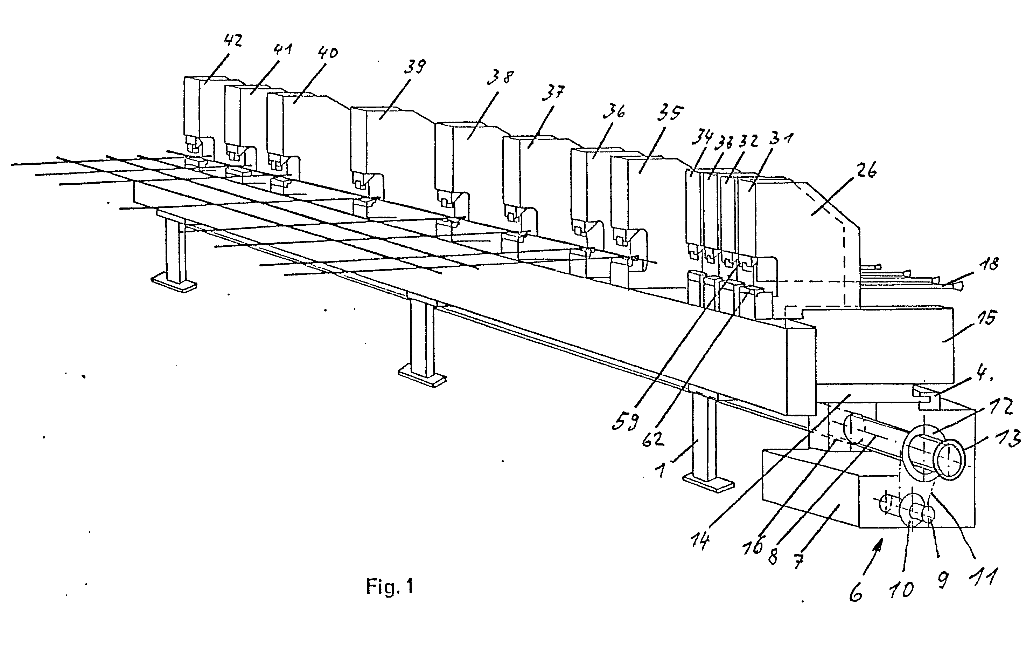

Die Schweißmaschine weist ein Untergestell 1 mit zwei parallelverlaufenden Schienen, von denen nur die rückseitige Schiene 4 in Fig. 1 zu sehen ist, und einen Antrieb 6 auf. Der Antrieb 6 besteht aus einer den Motor umfassenden Getriebeeinheit 7 und einer Transportspindel 8, die von der Getriebeeinheit 7 über einen Kettenantrieb, bestehend aus einem auf der Abtriebswelle 9 der Getriebeeinheit 7 sitzenden Kettenrad 10, einer Kette 11 und einem auf der Transportspindel 8 sitzenden Kettenrad 12, angetrieben wird. Auf der Transportspindel 8 sitzt ferner eine Scheibe 13, die von einem nicht dargestellten Fühler abgetastet wird. Der nicht dargestellte Fühler liefert an eine nicht dargestellte Steuereinheit dem Drehwinkel der Transportspindel entsprechende Impulse.

Die Schweißmaschine weist ferner eine Vielzahl von gleichartigen Schweißeinheiten 31 bis 42 auf. Jede dieser Schweißeinheiten 31 bis 42 ist mit einem Schlitten 14 in den Schienen 4 geführt. Auf dem Schlitten 14 ist der in einem flachen Gehäuse untergebrachte Schweißtrafo 15 montiert. An dem Schweißtrafo 15 ist die eigentliche Schweißeinheit 31, die in einem entsprechend flachen Gehäuse untergebracht ist, angebaut. Diese besteht im wesentlichen aus einer unteren, unbeweglichen Elektrode 62, die mit einer nicht dargestellten sekundärseitigen Stromzuführungsschiene verbunden ist, und aus einer in der Höhe durch einen als doppelseitig beaufschlagbaren Zylinder ausgebildeten Hubeinrichtung 22 höhenbeweglichen, oberen Elektrode 59, die über eine nicht dargestellte, flexible Strombrücke mit dem Sekundärausgang des Trafos 15 verbunden ist. Die Stromzuführungen und die mechanische Hubverstellung sind zwischen zwei Seitenschildern 26 des flachen Gehäuses untergebracht, in denen für die Elektroden 59, 62 und den quer einzuführenden Querdraht ein Fenster 28 vorgesehen ist, in das auch die Längsstabzuführung 18 mündet.

Eine Vielzahl von gleichartigen Schweißeinheiten 31 bis 42 sind auf den parallelverlaufenden Schienen 4 mittels einer von einem Antrieb 7 angetriebenen Transportspindel 8 und geeigneter Kupplungsmittel 10 auf gegenseitigen Abstand verfahrbar. Der Antrieb der einzelnen Schweißeinheiten ist in dem deutschen Patent 3 327 243 beschrieben.

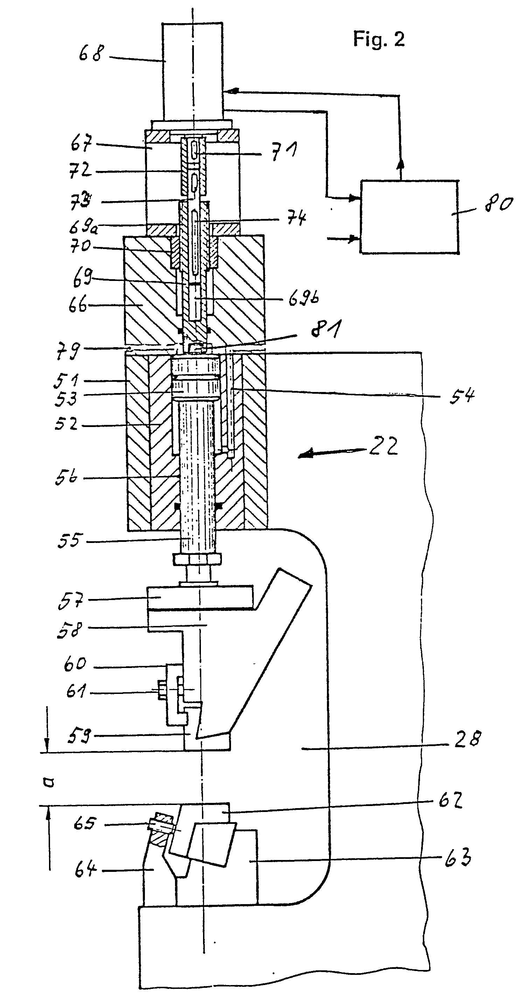

Der Zylinder 52 der Hubeinrichtung 22 ist in einen massiven Grundkörper 51 eingesetzt. Der doppelseitig beaufschlagbare Druckkolben 53 befindet sich in Fig. 2 in der maximalen oberen Stellung, wobei das über einen Kanal 54 zugeführte Druckmedium den Kolben 53 an der Unterseite beaufschlagt. An der Kolbenstange 55, welche in einer abgedichteten Büchse 56 geführt ist, ist unterhalb des Grundkörpers 51 der Elektrodenkopfhalter 57 fest angesetzt. Mit diesem Halter 57 ist der Elektrodenkopf 58 fest verschraubt. Eine Verschleißelektrode 59 ist mittels einer Klemmlasche 60 und einer Schraubverbindung 61 im Elektrodenkopf 58 fest eingeklemmt.

Unterhalba des Elektrodenkopfes 58 ist die untere, stationäre Schweißelektrode 62 mit einem Abstand «a» in einem Sekundärteil 63 der Schweißeinheit mittels einer Klemmlasche 64 und einer Druckschraube 65 fest eingeklemmt.

Oberhalb der Hubeinrichtung 22 ist ein Führungsteil 66 fest aufgesetzt, welches ein Zwischenstück 67 mit einem Stellmotor 68 trägt. Im Führungsteil 66 ist oberhalb des Kolbens 53 ein Druckbegrenzungsstößel 69 eingebaut, welcher im oberen Bereich als Gewindespindel 69a ausgebildet ist, auf der eine im Führungsteil 6 axial unverschieblich und drehfest eingesetzte Mutter 70 angeordnet ist. In dem Stößel 69a ist eine axiale Bohrung 69b angeordnet, in der axial verschieblich, aber drehfest, ein Zapfen 73 mit einer Paßfeder 74 sitzt. Der Zapfen 73 ist über eine Kupplungsbuchse 72 mit der Antriebswelle 71 des Stellmotors 68 fest verbunden.

Aufgrund dieser Verbindung zwischen dem Stellmotor 68 und dem Stößel 69 wird der Stößel bei Drehung des Motors 68 axial verstellt.

Mit welcher Drehrichtung der Motor 68 angetrieben und damit auch in welche Richtung die axiale Verstellung des Stößels 69 erfolgt, bestimmt eine Steuereinrichtung 80. Die Steuereinrichtung 80 erhält vom Motor 68 drehwinkelabhängige Signale. Auf diese Art und Weise läßt sich der axiale Stellweg des Stößel 69 kontrollieren. Darüber hinaus erhält die Steuereinrichtung 80 von einem Näherungsschalter 81 ein Steuersignal. Dieses Steuersignal wird geliefert, sobald der Stö-ßel 69 die Stirnseite des Kolbens 53 erreicht.

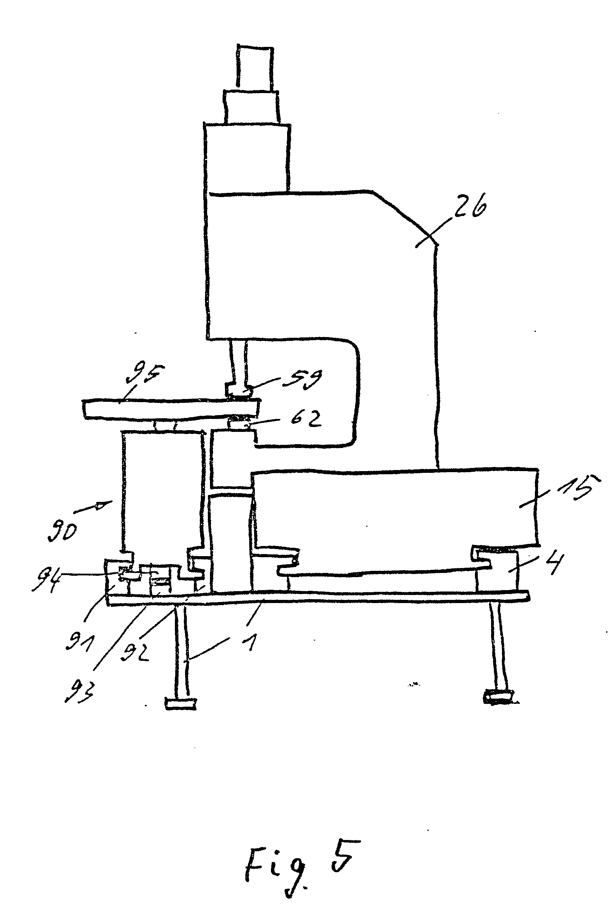

Beim Ausführungsbeispiel gem. Fig. 5 trägt das Untergestell 1 zusätzlich ein Werkzeug 90. Das Werkzeug 90 ist wie die Schweißeinheiten 26 auf zwei parallelen Schienen 91, 92 wie ein Schlitten längs den einzelnen Schweißeinheiten 26 bis 42 verfahrbar. Das Werkzeug 90 kann ähnlich wie die Schweißeinheiten 26 bis 42 durch eine angetriebene Spindel verfahren werden. Im Ausführungsbeispiel ist eine Zahnstange 93 vorgesehen, in die ein angetriebenes Ritzel 94 eingreift. Das Werkzeug 90 weist eine Schleifscheibe oder eine Frässcheibe 95 auf, die bis zwischen die Elektroden 59, 62 reicht.

Im folgenden wird die Funktion der Maschine beim Einstellen der oberen Elektrode näher erläutert.

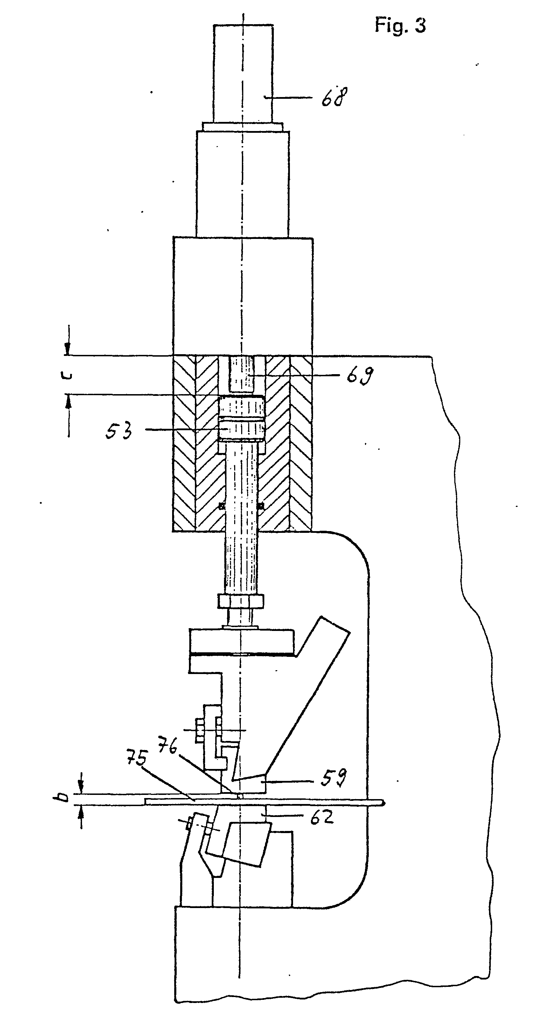

In Fig. 2 ist der Kolben 53 und damit auch die Elektrode 59 in der oberen Position dargestellt. Um die Elektrode 59 auf den gewünschten Elektro-denhub für bestimmte Stabdurchmesser einstel-len zu können, wird der Kolben 53 auf seiner Oberseite mit über einen Kanal 79 zugeführtes Druckmittel beaufschlagt. Die Elektrode 59 setzt sich auf die sich kreuzenden Längs- und Querstäbe 75, 76 auf, wie in Fig. 3 dargestellt. Der Elektrodenabstand b ist in dieser Stellung gleich der Summe der Stabdurchmesser der Quer- und Längsstäbe 75, 76. Während die Elektrode 59 in dieser Stellung gehalten wird, wird mittels des Stellmotors 68 der Stößel 69 heruntergefahren, bis daß er zur Anlage an der Kolbenoberseite kommt. Der Ausfahrweg des Stößels 69 beträgt dann a − b = c. Bei Erreichen dieser unteren Stellung des Stößels 69 wird der Stellmotor 68 umgesteuert und um einen bestimmten Betrag, der gleich dem ge-wünschten Elektrodenhub ist, hochgefahren. Die-ser Hub beträgt c − d.

Das Signal zum Umsteuern liefert der Näherungsschalter 81. Es versteht sich, daß statt des Näherungsschalters auch ein anderer Fühler vorgesehen sein kann, der bei Druckbeaufschlagung das entsprechende Umsteuersignal gibt. Grundsätzlich wäre es auch möglich, daß mittels des Stößels 69 die obere Elektrode bis zum Aufsetzen heruntergefahren wird. Ein zwischen dem Stößel und dem Kolben 53 angeordneter, druckempfindlicher Fühler könnte in diesem Fall das Signal zum Umsteuern geben.

Da alle Stößel um denselben Betrag zurückgefahren werden, ist gewährleistet, daß der Leerhub aller Elektroden gleich ist.

Um die Elektroden für die Nacharbeitung zu positionieren, muß die Steuereinrichtung die gleiche Verstellung vornehmen. In diesem Fall wird lediglich die obere Elektrode bis zum Aufsetzen auf die untere Elektrode verfahren und entsprechend dem Bearbeitungswerkzeug für alle Elektroden der gleiche Rückhub gewählt. Sobald die Elektroden auf den gleichen Abstand gefahren sind, wird das Werkzeug 90 längs der Schweißeinheiten verfahren. Die zwischen die oberen und unteren Elektroden 59, 62 eingreifende Schleifscheibe 95 bearbeitet dabei die Oberflächen der Elektroden der einzelnen Schweißeinheiten 26 bis 42 nacheinander.

**Patentansprüche**

1. Maschine zum Herstellen von aus Längs- und Querdrähten (75, 76) bestehenden und an deren Kreuzungspunkten verschweißten Drahtgittern, insbesondere für Betonbewehrungszwecke, bestehend aus mehreren auf Schienen auf gegenseitigen Abstand verfahrbaren Schweißeinheiten (31–42), die jeweils ein aus unterer und oberer Elektrode (62, 59) bestehendes Elektrodenpaar mit einer druckbeaufschlagten Hubeinrichtung (22) für die obere Elektrode (59) aufweisen, wobei die Hubeinrichtung (22) zur Hubbegrenzung der oberen Elektrode (59) einen einstellbaren Anschlag (69) aufweist, der gegen das die obere Elektrode (59) verstellende Antriebsorgan verstellbar ist, dadurch gekennzeichnet, daß jedem Anschlag (69) ein Stellmotor (68) zum Vor- und Zurückstellen zugeordnet ist, und daß für die Ansteuerung eines jeden Stellmotors (68) eine Steuereinrichtung (80) vorgesehen ist, die die mittels der Stellmotoren (68) verstellbaren Anschläge (69) individuell bis auf einen Abstand der oberen Elektroden (59) von den unteren Elektroden (62) verstellt, der der Gesamtdicke von Längs- und Querdrähten (75, 76) entspricht, und dann alle Anschläge (69) um einen Hubweg, der dem gewünschten Elektrodenhub entspricht, zurückstellt.

2. Maschine nach Anspruch 1, dadurch gekennzeichnet, daß auf einer parallel zu den Schienen für die Schweißeinheiten (31–42) angeordneten Schiene (91, 92) ein Werkzeug (90) zum Nacharbeiten der Elektroden (59, 62), z.B. ein Fräs- oder Schleifwerkzeug, verfahrbar angeordnet ist, das zwischen die auf denselben Abstand eingestellten Elektroden (59, 62) einführbar ist.

3. Maschine nach Anspruch 1 oder 2, dadurch gekennzeichnet, daß das Antriebsorgan (53) ein doppelseitig beaufschlagbarer Zylinderkolben ist und der Anschlag (69) ein in den zugehörigen Zylinderraum in Bewegungsrichtung des Zylinderkolbens (53) einfahrbarer Stößel ist.

4. Maschine nach Anspruch 3, dadurch gekennzeichnet, daß der Stößel (69) auf einer Teillänge als Gewindespindel (69a) ausgebildet ist, auf der eine in Stellrichtung axial fixierbare Mutter (70) sitzt.

5. Maschine nach Anspruch 3 oder 4, dadurch gekennzeichnet, daß der Stellmotor (68) über eine Teleskopkupplung (73, 74) drehfest mit der Spindel (69) gekuppelt ist.

## Claims

1. A machine for producing wire meshes which consist of longitudinal and transverse wires (75, 76) and are welded at their points of intersection, more particularly for concrete reinforcing purposes, comprising a number of welding units (31–42) which can be moved with a mutual spacing on rails and each comprise a pair of electrodes comprising an upper and lower electrode (62, 59) with a pressure-operated travel device (22) for the upper electrode (59), the travel device (22) having in order to limit the travel of the upper electrode (59) an adjustable stop (69) which can be adjusted in relation to the driving member adjusting the upper electrode (59), characterized in that associated with each stop (69) is an adjusting motor (68) for forward and reverse adjustment, and for the operation of each asjusting motor (68) a control system (80) is provided which adjusts the stops (69) adjustable by means of the adjusting motors (68) individually to a distance between the upper electrode (59) and the lower electrode (62) corresponding to the total thickness of the longitudinal and transverse wires (75, 76), and then adjusts all the stops (69) back by a travel corresponding to the required electrode travel.

2. A machine according to claim 1, characterized in that disposed movably on a rail (91, 92) disposed parallel with the rail for the welding units (31–42) ist a tool (90), for example, a milling or grinding tool, for the dressing of the electrodes (59), which can be introduced between the electrodes (59, 62) adjusted to the same spacing.

3. A machine according to claims 1 or 2, characterized in that the driving member (53) is a bilaterally operable cylinder piston and the stop (69) is a tappet which can be moved into the associated cylinder space in the direction of movement of the cylinder piston (53).

4. A machine according to claim 3, characterized in that the tappet (69) is constructed over a portion of its length in the form of a screwthreaded spindle (69a) on which a nut (70) fixable axially in the direction of adjustment is disposed.

5. A machine according to claims 3 or 4, characterized in that the adjusting motor (68) is coupled to the spindle (69) for corotation via a telescopic coupling (73, 74).

## Revendications

1. Machine pour la fabrication de treillis métalliques constitués de fils longitudinaux et transversaux (75, 76) soudés à leurs points de croisement, en particulier pour des buts d'armatures de béton, constituée de plusieurs unités de soudage (31–42) mobiles sur des rails à en écartement relatif, qui présentent chacune une paire d'électrodes d'une électrode inférieure et d'une électrode supérieure (62, 59) avec un dispositif de levage (22) soumis à une pression pour l'électrode supérieure (59), le dispositif de levage (22) présentant une butée réglable (69) pour limiter le soulèvement de l'électrode supérieure (59) qui est mobile par rapport à l'organe d'entrainement déplaçant l'électrode supérieure (59), caractérisée en ce qu'un moteur de réglage (68) est adjoint à chaque butée (69) pour l'avance et le retour, et qu'un dispositif de commande (80) est prévu pour commander chacun des moteurs de commande (68), qui déplace individuellement les butées (69) déplaçables au moyen des moteurs de commande (68) jusqu'à un écartement entre les électrodes supérieures (59) et les électrodes inférieures (62) qui correspond à l'épaisseur totale des fils longitudinaux et transversaux (75, 76), et qui ramène ensuite toutes les butées (69) selon un trajet de course qui correspond à la course d'électrodes souhaitée.

2. Machine selon la revendication 1, caractérisée en ce qu'un outil (90) de retouche sur les électrodes (59, 62), par exemple un outil de fraisage ou de rectification, est monté mobile sur un rail (91, 92) disposé parallèle aux rails pour les unités de soudage (31–42), et peut être inséré entre les électrodes positionnées au même écartement.

3. Machine selon la revendication 1 ou 2, caractérisée en ce que l'organe d'entrainement (53) est un vérin à double effet et la butée (69) est un coulisseau pouvant être inséré dans le volume de cylindre qui en fait partie dans la direction de déplacement du vérin.

4. Machine selon la revendication 3, caractérisée en ce que le coulisseau (69) est construit sur une partie de sa longueur en forme de broche filetée (69a) sur laquelle est logé un écrou (70) pouvant être fixé axialement en direction de réglage.

5. Machine selon la revendication 3 ou 4, caractérisée en ce que le moteur de réglage (68) est accouplé fixe en rotation à la broche (69) par l'intermédiaire d'un accouplement télescopique (73, 74).

Fig. 1

Fig. 2

Fig. 3

Fig. 4

**Fig. 5**